# EUROPÄISCHE PATENTSCHRIFT

(11) **EP 1 577 589 B1**
(45) Veröffentlichungstag und Bekanntmachung des Hinweises auf die Patenterteilung: **29.08.2007**
(21) Anmeldenummer: 05004756.2
(22) Anmeldetag: 04.03.2005
(51) Int. Cl.: F16J 15/08

(54) **Zylinderkopfdichtung**
Cylinder head gasket
Joint de culasse

(30) Priorität: 17.03.2004 DE 102004012905
(43) Veröffentlichungstag der Anmeldung: 21.09.2005
(73) Patentinhaber: ElringKlinger AG, 72581 Dettingen (DE)
(72) Erfinder: Detmann, Klaus, 65396 Walluf (DE); Opitz, Stefan, 65510 Hünstetten (DE); Gruhler, Tobias, 72793 Pfullingen (DE); Schaible, Frank, 73728 Esslingen (DE)
(74) Vertreter: Hoeger, Stellrecht & Partner Patentanwälte

(56) Entgegenhaltungen:
- EP-A- 0 581 615
- EP-A- 1 298 364
- EP-A- 1 298 365
- DE-A1- 19 641 491
- US-A- 5 478 092

## Beschreibung

Die Erfindung betrifft Zylinderkopfdichtungen, und zwar im wesentlichen metallische Zylinderkopfdichtungen, welche eine Dichtungsplatte aufweisen, deren Hauptbestandteil eine Metallblechlage oder mehrere aufeinandergeschichtete Metallblechlagen ist bzw. sind. Insbesondere befaßt sich die Erfindung mit Zylinderkopfdichtungen für Mehrzylindermotoren; soweit solche Motoren nicht für jeden einzelnen Zylinder eine separate Zylinderkopfdichtung aufweisen, besitzt die Zylinderkopfdichtung eine längliche Dichtungsplatte mit mehreren Brennraumöffnungen, die in einer Reihe hintereinander angeordnet sind, deren Zentren aber auch auf einer sich in Längsrichtung der Dichtungsplatte erstreckenden Zickzacklinie liegen können.

Die hinsichtlich der Abdichtwirkung kritischsten Stellen einer Zylinderkopfdichtung sind die die Brennraumöffnungen umschließenden Bereiche, da dort gegen die höchsten Drücke (Brenngasdrücke) abgedichtet werden muß. Eine Zylinderkopfdichtung ist deshalb üblicherweise so gestaltet, daß, in Richtung senkrecht zur Dichtungsplatte gemessen, die Dicke der Dichtungsplatte bzw. der Elemente der Dichtungsplatte um die Brennraumöffnungen herum besonders groß ist (sogenannte Brennraumüberhöhung), um bei zwischen Zylinderkopf und Motorblock eingespannter Zylinderkopfdichtung um die Brennraumöffnungen herum besonders hohe Pressungskräfte zu erzielen. Vor allem aufgrund der Leichtbauweise von Zylinderkopf und Motorblock moderner Motoren kann diese Brennraumüberhöhung zu Verzügen der Motorbauteile führen, d. h. im Zylinderkopf, unter Umständen aber auch im Motorblock und/oder in den Zylinderlaufbuchsen (soweit der Motor solche aufweist). Diese Verzüge sind dann besonders hoch in denjenigen Bereichen der Motorbauteile, zwischen denen die Längsendbereiche der Zylinderkopfdichtung eingespannt sind, ein Effekt, der noch dadurch verstärkt wird, daß die hohen, in den Brennräumen entstehenden Brenngasdrücke tendenziell bewirken, daß der Zylinderkopf zwischen seinen Längsenden aufgewölbt (weg vom Motorblock), d. h. durchgebogen wird. Nur der Vollständigkeit halber sei darauf hingewiesen, daß diese Phänomene grundsätzlich auch bei einem Einzylindermotor auftreten, bei dem der Zylinderkopf mit dem Motorblock über vier Zylinderkopfschrauben verbunden ist, welche die Zylinderkopfdichtung in der Nähe ihrer vier Ecken durchsetzen, so daß die Zylinderkopfschrauben paarweise zwei einander gegenüberliegenden Seiten des Motors benachbart angeordnet sind.

Bei Zylinderkopfdichtungen der eingangs erwähnten Art für moderne Motoren, d. h. bei metallischen Zylinderkopfdichtungen, hat die um eine Brennraumöffnung herum vorgesehene Abdichtvorrichtung meist die Gestalt einer oder mehrerer, in eine oder mehrere Metallblechlagen eingeprägten Sicke bzw. Sicken mit federelastischen Eigenschaften, wobei die Sicke eine sogenannte Vollsicke (mit einem ungefähr kreisbogenförmigen Querschnitt) oder eine sogenannte Halbsicke sein kann, deren Querschnitt ungefähr stufenförmig ist. Da eine solche Abdichtsicke im Motorbetrieb ihre federelastischen Eigenschaften beibehalten muß, um ihre Abdichtfunktion erfüllen zu können, darf sie beim Anziehen der Zylinderkopfschrauben, d. h. bei der Montage der Zylinderkopfdichtung, und im Motorbetrieb nicht übermäßig abgeflacht werden; zu diesem Zweck weisen bekannte Zylinderkopfdichtungen der in Rede stehenden Art neben der eine Brennraumöffnung umschließenden Abdichtsicke eine Verformungsbegrenzungsvorrichtung auf, die üblicherweise als Stopper bezeichnet wird. In einer Draufsicht auf die Zylinderkopfdichtung liegt ein Stopper entweder zwischen der Brennraumöffnung und der Abdichtsicke oder auf der von der Brennraumöffnung abgewandten Seite der Abdichtsicke neben letzterer, es gibt aber auch Zylinderkopfdichtungen, bei denen auf beiden Seiten der Abdichtsicke jeweils ein Stopper vorgesehen ist. Der Stopper umschließt die Brennraumöffnung gleichfalls vollständig oder zumindest nahezu vollständig und hat eine geringere Höhe als die unbelastete Abdichtsicke, so daß sich letztere bei einer Druckbeanspruchung der Zylinderkopfdichtung nur so weit federelastisch abflachen läßt, bis der Stopper als Anschlag wirkt und eine weitere Abflachung der Abdichtsicke verhindert. Stopper haben häufig die Gestalt von auf eine Metallblechlage der Zylinderkopfdichtung aufgeschweißten Blechringen.

Um die durch die sogenannte Brennraumüberhöhung verursachten, vorstehend beschriebenen Verzüge in den Motorbauteilen zu reduzieren, hat man bei mehrlagigen metallischen Zylinderkopfdichtungen für Mehrzylindermotoren schon Abstützvorrichtungen in den Bereichen der Längsenden der Dichtungsplatte vorgesehen, durch die an bestimmten Stellen, d. h. an den Stellen der Abstützvorrichtungen, die Summe der Materialstärken der Elemente der Dichtung (senkrecht zur Ebene der Dichtungsplatte gemessen) erhöht wird. Bei einer dreilagigen metallischen Zylinderkopfdichtung mit zwei außenliegenden Blechlagen (Decklagen), welche mit die abzudichtenden Öffnungen umschließenden Abdichtsicken versehen sind, und einer zwischen den Decklagen angeordneten Trägerblechlage wurden beim Ausstanzen der letzteren mit der Trägerblechlage verbundene Blechlappen ausgestanzt und dann auf die eigentliche Trägerblechlage zurückgefaltet, so daß sich an den Orten der Blechlappen die doppelte Blechstärke ergibt. Bei einer Ausführungsform dieser dreilagigen Zylinderkopfdichtung befinden sich die dadurch geschaffenen Abstützvorrichtungen in der Nähe der Längsenden der Dichtungsplatte. Derartige, auf eine Blechlage umgelegte bzw. zurückgefaltete Blechlappen sind für den Herstellungsprozeß jedoch nicht völlig unproblematisch - steht ein Blechlappen vor dem Zurückfalten über die eigentliche Peripherie der Blechlage über, hat er einen höheren Materialverbrauch zur Folge, außerdem ist der Vorgang des Zurückfaltens eines solchen Blechlappens in einem sogenannten Folgewerkzeug ein nicht in jedem Falle prozeßsicherer Vorgang.

Ferner sind bei metallischen Zylinderkopfdichtungen Abstützvorrichtungen bekannt, deren Gestaltung derjenigen eines sogenannten Wellenstoppers entspricht, wie er in der Zeitschrift MTZ 10/2001, Seiten 816 - 824 beschrieben wird - ein Wellenstopper ist Bestandteil einer um eine abzudichtende Öffnung herum vorgesehenen Abdichtvorrichtung, die aus einer die abzudichtende Öffnung umschließenden federelastischen Sicke und einem Wellenstopper besteht, der die Gestalt mehrerer, parallel zueinander verlaufender, in eine Blechlage eingeprägter Vollsicken hat, welche die abzudichtende Öffnung gleichfalls zumindest nahezu umschließen und deren Kämme in einer Draufsicht auf die Blechlage eine kreisbogenförmige Gestalt haben. In MTZ 10/2003, Seiten 842 - 849, insbesondere den Seiten 846 - 848, werden derartige, von einem Wellenstopper abgeleitete Abstützvorrichtungen erwähnt, welche im Bereich der Längsenden der Dichtungsplatte einer Zylinderkopfdichtung angeordnet sind und die vorstehend erwähnten Verzüge der Motorbauteile vermindern sollen.

Schließlich ergeben sich aus der EP-A-0 581 615 und der US-A-5 478 092 im Bereich der Längsenden einer Zylinderkopfdichtung für einen Mehrzylindermotor vorgesehene Abstützvorrichtungen in Form von durch Prägen verdickten Bereichen einer Metallblechlage dieser Zylinderkopfdichtungen, wobei die Prägungen die Gestalt von Vollsicken haben, die in einer Draufsicht auf diese Blechlage die folgenden Formen haben: eine geradlinige Sicke, welche parallel zu einem Schmalseitenrand der ungefähr rechteckigen Blechlage verläuft und sich diesem Schmalseitenrand benachbart ungefähr zwischen zwei Schraubenöffnungen erstreckt, welche für den Durchtritt von Zylinderkopfschrauben vorgesehen und diesem Schmalseitenrand benachbart sind; eine ungefähr C- oder U-förmige Sicke mit drei geradlinigen Sickenabschnitten, welche über zwei viertelkreisbogenförmige Sickenabschnitte miteinander verbunden sind und sich entlang dem einen Schmalseitenrand sowie kurzen Abschnitten der beiden Längsseitenränder der Blechlage erstrecken und die beiden Schraubenöffnungen teilweise umgeben; eine dritte Ausführungsform unterscheidet sich von der zweiten Ausführungsform dadurch, dass der dem einen Schmalseitenrand benachbarte Sickenabschnitt drei ungefähr U-förmige und in Richtung auf die benachbarte Brennraumöffnung vorspringende Auswölbungen aufweist, in deren konkave Seiten jeweils eine kurze geprägte Sicke eingreift, die sich ungefähr senkrecht zum benachbarten Schmalseitenrand der Blechlage erstreckt; bei einer vierten Ausführungsform sind nur drei derartige kurze Sicken vorgesehen, die sich ungefähr senkrecht zum benachbarten Schmalseitenrand erstrecken; eine fünfte Ausführungsform unterscheidet sich von der ersten Ausführungsform nur dadurch, dass die parallel zum benachbarten Schmalseitenrand der Blechlage verlaufende Sicke einen wellenförmigen Verlauf mit flachen, langgestreckten Wellen hat; bei einer sechsten Ausführungsform bildet eine einem Schmalseitenrand der Blechlage benachbarte Sicke in der Draufsicht auf die Blechlage einen flachen Winkel, der sich in Richtung auf diesen Schmalseitenrand öffnet und dessen Spitze ungefähr in der Mitte zwischen den besagten Schraubenöffnungen liegt; bei einer siebten Ausführungsform treten an die Stelle des einen Winkels zwei Winkel, welche in Richtung des benachbarten Schmalseitenrands der Blechlage aufeinanderfolgen und im Abstand voneinander angeordnet sind; schließlich zeigt die US-A-5 478 092 noch zwei Modifikationen der siebten Ausführungsform, bei welchen an die Stelle der beiden Winkel der siebten Ausführungsform drei Winkel treten, die in Richtung des benachbarten Schmalseitenrands der Blechlage aufeinanderfolgen und deren Spitzen abwechselnd zu diesem Schmalseitenrand und zu der benachbarten Brennraumöffnung weisen. Bei der dritten und der vierten Ausführungsform ist die Länge der kurzen Sicken größer als der Durchmesser der benachbarten Schraubenöffnungen. Alle diese Ausführungsformen sind an mehrlagigen metallischen Zylinderkopfdichtungen verwirklicht, wobei die mit der Prägung bzw. den Prägungen versehene Blechlage sich zwischen Deckblechlagen der betreffenden Zylinderkopfdichtung befindet.

Die vorliegende Erfindung betrifft nun eine Zylinderkopfdichtung mit den sich aus der EP-A-0 581 615 bzw. der US-A-5 478 092 ergebenden Merkmalen des Oberbegriffs des beigefügten Patentanspruchs 1 bzw. 2, und der Erfindung lag die Aufgabe zugrunde, bei einer solchen Zylinderkopfdichtung die der Verminderung der Bauteilverzüge dienende Abstützvorrichtung so auszubilden, dass sie gegenüber senkrecht zur Ebene der Zylinderkopfdichtung verlaufenden Pressungskräften eine höhere Verformungssteifigkeit aufweist als die vorstehend erörterten, durch Prägen der wenigstens einen Metallblechlage erzeugten bekannten Abstützvorrichtungen.

Diese Aufgabe lässt sich erfindungsgemäß mit den Merkmalen des Kennzeichens des beigefügten Anspruchs 1 und/oder den Merkmalen des Kennzeichens des beigefügten Anspruchs 2 lösen.

Wird eine Abstützvorrichtung von parallel zueinander verlaufenden Sicken mit in der Draufsicht geradlinigem oder kreisbogenförmigem Verlauf gebildet, kann die zwischen Motorblock und Zylinderkopf eingespannte Zylinderkopfdichtung der Abflachung der Sicken keinen wirklich großen Widerstand entgegensetzen, da mit der Abflachung solcher die Abstützvorrichtung bildenden Sicken einhergehende Schiebebewegungen von Bereichen der Metallblechlage in der Lagenebene quer zum Sickenverlauf nicht vollständig zu verhindern sind. Bei erfindungsgemäßen Zylinderkopfdichtungen mit mäanderförmig gestalteten Abstützsicken können bei einer Druckbelastung der Abstützvorrichtung wegen des mäanderförmigen Sickenverlaufs jedoch keine nennenswerten derartigen Schiebebewegungen quer zu allen Sickenabschnitten auftreten, weshalb eine mäanderförmige Abstützsicke sehr viel höheren Pressungskräften widerstehen kann, ohne nennenswert abgeflacht zu werden, und dies gilt erst recht für den Fall, dass die Abstützvorrichtung erfindungsgemäß ein zweidimensionales Muster von Vertiefungen und Erhebungen aufweist. Die erfindungsgemäße Lösung mit mehreren Abstützsicken führt zu einer höheren Verformungssteifigkeit der Abstützvorrichtung auch gegenüber den sich aus der EP-A-0 581 615 und der US-A-5 478 092 ergebenden Abstützvorrichtungen aus Abstützsicken mit insgesamt oder teilweise mäanderförmiger Gestalt oder aus einer Gruppe von mehreren verhältnismäßig kurzen Abstützsicken, da sich bei der erfindungsgemäßen Lösung die gewünschte hohe Verformungssteifigkeit leicht erzielen lässt durch die Anzahl der mäanderförmigen Abstützsicken, die "Packungsdichte" der Mäanderschlingen der mäanderförmigen Abstützsicken oder eine entsprechend hohe Anzahl von sehr kurzen Abstützsicken, welche sich aufgrund ihrer Kürze in großer Zahl auf einer verhältnismäßig kleinen Fläche der mit der Abstützvorrichtung versehenen Blechlage unterbringen lassen.

Aus der EP-1 298 364-A sowie der EP-1 298 365-A der ElringKlinger AG ergeben sich Stopper in Form von durch Prägen verdickten Bereichen einer Metallblechlage von Zylinderkopfdichtungen, wobei die Stopper insbesondere die folgenden Gestaltungen aufweisen: In der mit der Abdichtsicke versehenen Blechlage oder einer der letzteren benachbarten Blechlage wird mittels eines Tiefziehwerkzeugs eine Abstützsicke erzeugt, die in einer Draufsicht auf diese Blechlage mäanderförmig ausgebildet ist und sich entlang der durch den Stopper zu schützenden Abdichtsicke erstreckt; bei einer anderen Ausführungsform wird der Stopper durch Fließpressen erzeugt, wobei in einem ringförmigen Bereich der Blechlage (der in einer Draufsicht auf die Zylinderkopfdichtung der durch den Stopper zu schützenden Abdichtsicke benachbart ist) ein in der Draufsicht auf die Blechlage zweidimensionales Muster von fließgepressten napfartigen Vertiefungen erzeugt wird, denen durch beim Einprägen der Vertiefungen verdrängtes Material der Blechlage gebildete Erhebungen zugeordnet sind - dabei ist die Gesamtdicke der Blechlage im Bereich der Erhebungen und Vertiefungen größer als die originäre Dicke der Blechlage, d. h. die Dicke der Blechlage vor ihrer Verformung durch Fließpressen.

Die in Rede stehenden Abstützvorrichtungen unterscheiden sich jedoch ganz grundsätzlich von Stoppern: Während einem Stopper stets eine durch diesen zu schützende federelastische Abdichtsicke zugeordnet ist und der Stopper sich in unmittelbarer Nachbarschaft der Abdichtsicke befindet und sich zumindest im wesentlichen über die ganze Länge der Abdichtsicke und um eine abzudichtende Öffnung der Dichtung herum erstreckt, weist eine erfindungsgemäße Abstützvorrichtung keines dieser für einen Stopper charakteristischen Merkmale auf, auch wenn in der Nachbarschaft einer Abstützvorrichtung eine Abdichtsicke verlaufen kann - in diesem Fall erstreckt sich die Abstützvorrichtung nur längs eines Abschnitts der Abdichtsicke, der viel kürzer als die Gesamtlänge der Abdichtsicke ist; auch kann die wirksame Höhe der Abstützvorrichtung gleich oder größer sein als die Höhe der Sicke, während ein Stopper für eine Abdichtsicke stets niederer als die Sicke ist. Die Abstützvorrichtung soll also nicht die Funktion übernehmen, die Abdichtsicke vor einer übermäßigen Abflachung zu schützen.

Bei einer mehrlagigen erfindungsgemäßen Zylinderkopfdichtung kann die Abstützvorrichtung bzw. können die Abstützvorrichtungen in derselben Blechlage wie die Abdichtvorrichtung bzw. die Abdichtvorrichtungen oder in einer anderen Lage vorgesehen sein, da es primär nur darauf ankommt, die Dicke der gepreßten Zylinderkopfdichtung an der Stelle der Abstützvorrichtung zu vergrößern. In einer Draufsicht auf die Zylinderkopfdichtung ist der Abstand der Abstützvorrichtung von der dieser am nächsten liegenden Abdichtvorrichtung im allgemeinen zumindest über einen größeren Teil der Länge dieser Abdichtvorrichtung deutlich größer als die Breite der Abdichtvorrichtung (gemessen in radialer Richtung bezüglich der der Abdichtvorrichtung zugeordneten, abzudichtenden Öffnung der Zylinderkopfdichtung), und zwar eben auch dann, wenn die Abdichtvorrichtung aus einer oder mehreren Abdichtsicken und einem oder mehreren diese schützenden Stoppern besteht. Wenn vorstehend von einer größeren Materialstärke oder einer größeren Gesamtdicke im Bereich einer Abstützvorrichtung die Rede ist, soll unter der Materialstärke bzw. der Dicke der Abstützvorrichtung der Abstand zweier Tangentialebenen verstanden werden, welche parallel zur Ebene der Dichtungsplatte verlaufen und die Abstützvorrichtung beidseitig tangieren und zwischen sich einschließen. Unter den abzudichtenden Öffnungen der Zylinderkopfdichtung sind primär deren Brennraumöffnungen zu verstehen; weist die Zylinderkopfdichtung aber Öffnungen für den Durchgang beispielsweise eines Kühlmediums oder von Öl auf, welche mit einer oder mehreren Abdichtvorrichtungen der Zylinderkopfdichtung abzudichten sind, so wie dies z. B. auf eine Abdichtsicke zutrifft, die in der Nähe der Peripherie einer Zylinderkopfdichtung verläuft, einen in sich geschlossenen Linienzug bildet und eine Gruppe solcher von einem Fluid zu durchströmenden Öffnungen der Zylinderkopfdichtung umschließt, trifft auch auf diesen Fall die Definition zu, daß der verdickte Abstützbereich einer erfindungsgemäßen Abstützvorrichtung keine dieser Öffnungen vollständig oder nahezu vollständig umschließt. Ferner zeichnen sich bevorzugte Ausführungsformen dadurch aus, daß wenn die Zylinderkopfdichtung eine einem erfindungsgemäßen Abstützbereich benachbarte Abdichtsicke aufweist, sich der Abstützbereich nur über einen kleineren Teil der Länge der Abdichtsicke dieser benachbart erstreckt, d. h. über weniger als die halbe Länge dieser Abdichtsicke.

Wie sich aus den vorstehenden Erläuterungen ergab, treten bei Mehrzylindermotoren Bauteilverzüge insbesondere im Bereich der Längsenden des Motors auf. Bei einer Zylinderkopfdichtung mit einer länglichen Dichtungsplatte, welche zwischen ihren beiden Längsenden mehrere Brennraumöffnungen aufweist, wird man deshalb zweckmäßigerweise wenigstens zwei erfindungsgemäße Abstützbereiche vorsehen, die in der Nähe der Längsenden der Dichtungsplatte angeordnet sind. Bei einer Zylinderkopfdichtung mit einer länglichen Dichtungsplatte, welche zwischen ihren beiden Längsenden mehrere Brennraumöffnungen aufweist, sind üblicherweise in der Nähe dieser Längsenden Schraubenöffnungen für den Durchtritt von Zylinderkopf-schrauben vorgesehen; bei eingebauter Zylinderkopfdichtung ergeben sich um die Zylinderkopfschrauben herum erhöhte Pressungskräfte, und dies gilt bei einer Zylinderkopfdichtung für einen Mehrzylindermotor in noch höherem Maß für die den Längsenden der Dichtung benachbarten Zylinderkopfschrauben, da diese nur den beiden endständigen Brennräumen zugeordnet sind, während zwischen einander benachbarten Brennräumen angeordnete Zylinderkopfschrauben jeweils zwei Brennräumen zugeordnet sind, weshalb bei bevorzugten Ausführungsformen erfindungsgemäßer Zylinderkopfdichtungen für Mehrzylindermotoren wenigstens zwei erfindungsgemäße Abstützbereiche vorgesehen sind, die in der Nähe der den Längsenden der Dichtungsplatte benachbarten Schraubenöffnungen liegen.

Weitere Merkmale, Vorteile und Einzelheiten der Erfindung ergeben sich aus den beigefügten Ansprüchen und/oder aus den beigefügten Zeichnungen und der nachfolgenden Beschreibung der in diesen Zeichnungen dargestellten bevorzugten Ausführungsformen der Erfindung; in den Zeichnungen zeigen:
- Fig. 1: eine teilweise etwas schematisierte Draufsicht auf eine erfindungsgemäße Zylinderkopfdichtung;
- Figuren 2 und 3: Schnitt nach den Linien 2-2 bzw. 3-3 aus Fig. 1, wobei eine erste, besonders vorteilhafte Ausführungsform erfindungsgemäßer Abstützvorrichtungen dargestellt wurde;
- Fig. 4: den linken Teil der Fig. 2 in größerem Maßstab;
- Fig. 5: eine perspektivische Darstellung eines Abschnitts einer erfindungsgemäßen Abstützvorrichtung, und zwar einer gegenüber den Ausführungsformen nach den Figuren 2 bis 4 etwas abgewandelten Ausführungsform;
- Figuren 6 und 7: zwei weitere Ausführungsformen einer erfindungsgemäßen Abstützvorrichtung bei einer zweilagigen Dichtung;
- Fig. 8: eine Draufsicht auf einen Teil einer erfindungsgemäßen Zylinderkopfdichtung mit einer erfindungsgemäßen, durch geprägte Mäandersicken gebildeten Abstützvorrichtung;
- Figuren 8A, 8B, 8C und 8D: Schnitte nach der Linie 8-8 in Fig. 8 durch vier verschiedene Varianten der in Fig. 8 gezeigten Zylinderkopfdichtung;
- Fig. 9: wiederum eine Draufsicht auf einen Teil einer erfindungsgemäßen Zylinderkopfdichtung mit einer von geprägten Mäandersicken gebildeten Abstützvorrichtung, und
- Fig. 10: einen Schnitt gemäß der Linie 10-10 in Fig. 9.

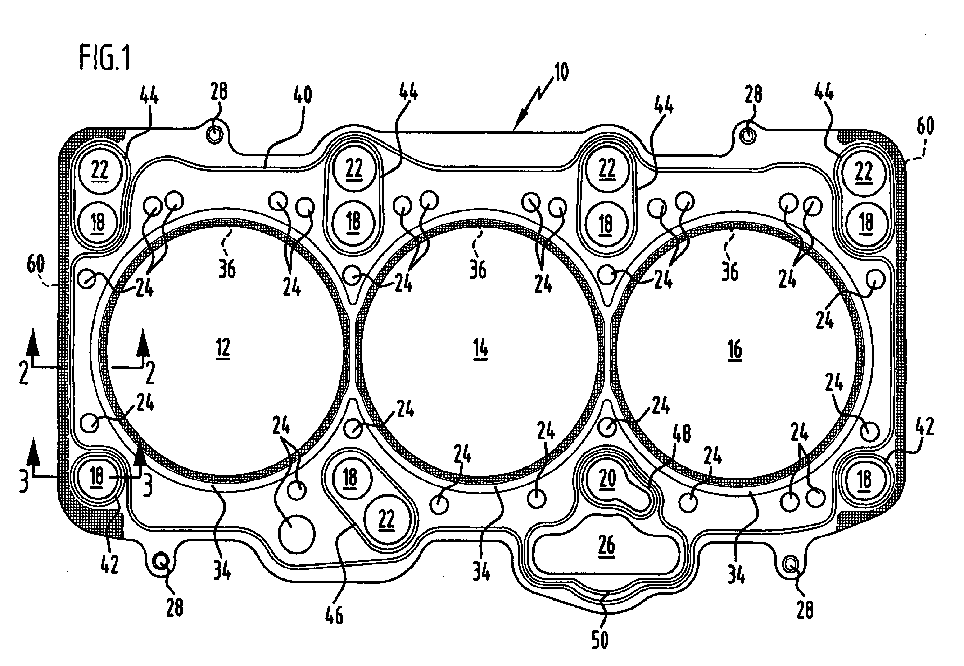

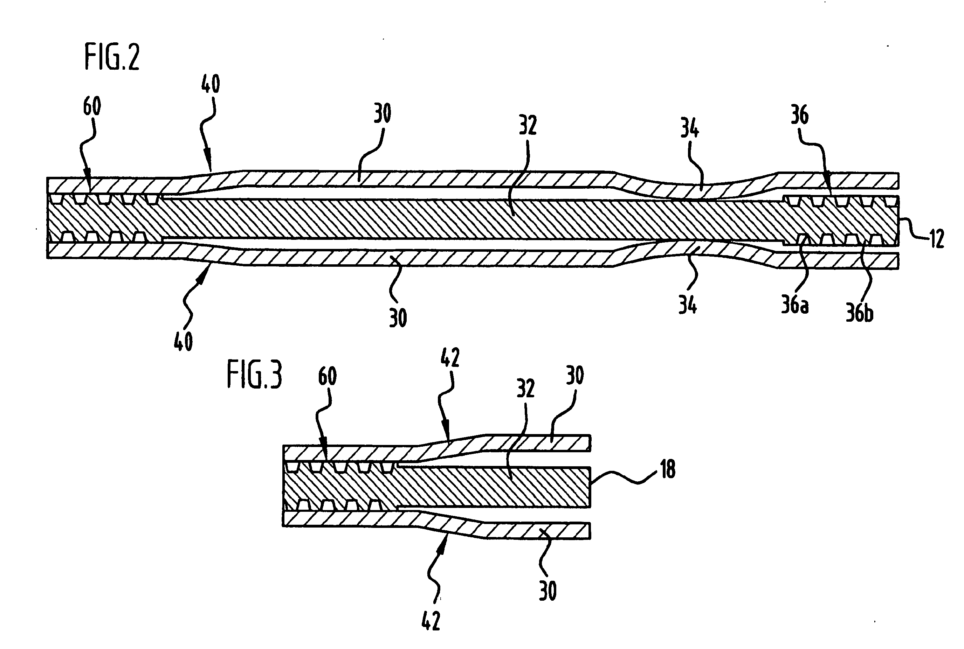

Die in Fig. 1 in einer Draufsicht dargestellte dreilagige (siehe die Figuren 2 bis 4) Zylinderkopfdichtung hat eine Dichtungsplatte 10 mit einer Vielzahl von Durchgangsöffnungen, nämlich drei Brennraumöffnungen 12, 14 und 16, sieben wie üblich kreisrund gestaltete Schraubenlöcher 18, eine Öffnung 20 für den Durchtritt sowohl einer Zylinderkopfschraube als auch von Schmieröl, fünf weitere kreisrunde Öffnungen 22 für den Durchtritt von Schmieröl, mehrere verschieden große Kühlwasser-Durchtrittsöffnungen 24, sowie eine Ölrücklauföffnung 26 für den Rücklauf von Schmieröl aus dem Zylinderkopf in den Motorblock. Mit 28 sind Hohlniete bezeichnet, mit denen die drei Metallblechlagen der Zylinderkopfdichtung miteinander verbunden wurden.

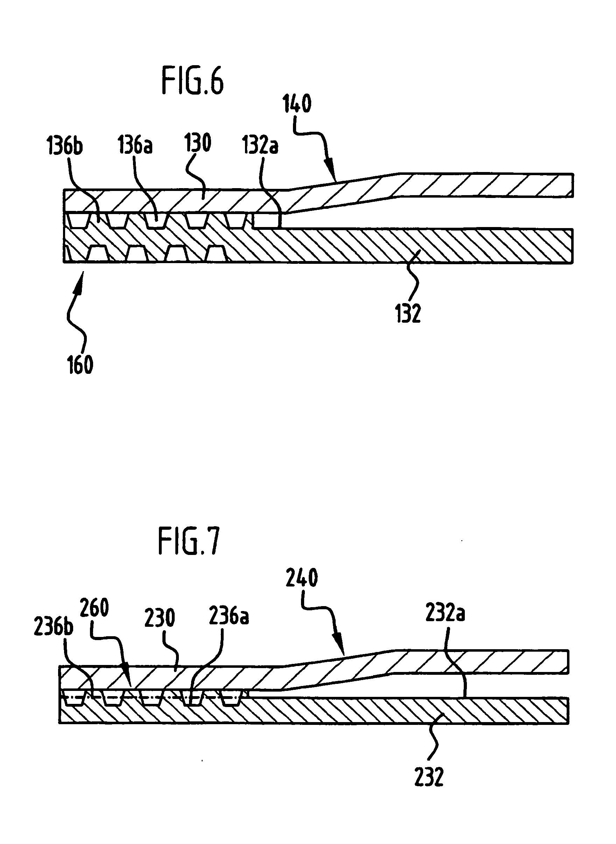

Wie die Fig. 1 in Verbindung mit den Figuren 2 bis 4 erkennen läßt, setzt sich die Dichtungsplatte 10 aus zwei Deckblechlagen 30 und einer dazwischen angeordneten Trägerblechlage 32 zusammen. Die Deckblechlagen bestehen aus Federstahlblech, während die Trägerblechlage aus einem durch Fließpressen plastisch verformbaren Stahlblech hergestellt wurde, welches allerdings gehärtet worden sein könnte, nachdem die Trägerblechlage 32 ihre endgültige Form erhielt. Jede der Deckblechlagen 30 besitzt für jede der Brennraumöffnungen 12, 14 und 16 eine federelastische, in Richtung auf die Trägerblechlage 32 vorspringende Abdichtsicke 34, welche als sogenannte Vollsicke ausgebildet ist, wobei sich die beiden einer Brennraumöffnung zugeordneten Abdichtsicken gegenüberliegen. Damit beim Einspannen der Zylinderkopfdichtung und im Motorbetrieb die Abdichtsicken 34 nicht in unzulässig hohem Maß abgeflacht werden können, ist das Trägerblech 32 um jede Brennraumöffnung herum und insbesondere unmittelbar an diese angrenzend mit einem Stopper 36 versehen, welcher einen verdickten Bereich der Trägerblechlage 32 bildet, wobei sich dieser Bereich in Form eines ringförmigen Bandes um die betreffende Brennraumöffnung herum erstreckt. Bei der dargestellten Ausführungsform ragt der Stopper 36 über beide Hauptoberflächen der Trägerblechlage 32 hinaus und wird von einem zweidimensionalen Muster aus fließgepreßten napfartigen Vertiefungen 36a und Erhebungen 36b gebildet, wobei diese Erhebungen durch beim Einprägen der Vertiefungen verdrängtes Material der Blechlage gebildet werden und jeder Vertiefung 36a auf der anderen Seite der Trägerblechlage 32 eine Erhebung 36b direkt gegenüberliegt. Ein solches zweidimensionales Muster, welches später noch näher beschrieben werden wird, ist in Fig. 5 dargestellt, welche jedoch zum einen keinen Stopper, sondern eine erfindungsgemäße Abstützvorrichtung, und zum anderen ein insofern abgewandeltes Gebilde darstellt, als in Fig. 5 jeder Vertiefung eine Vertiefung und jeder Erhebung eine Erhebung gegenüberliegt. Wie in Fig. 5 soll aber auch der Stopper 36 aus Fig. 2 auf beiden Seiten der Trägerblechlage 32 ein schachbrettartiges Muster von Vertiefungen und Erhebungen aufweisen. Wie aus Fig. 2 deutlich wird, können die Abdichtsicken 34 also nur so weit abgeflacht werden, bis die jeweilige Deckblechlage 30 auf dem Stopper 36 aufliegt.

Alle Wasserlöcher 24 werden von einer Abdichtsicke 40 umschlossen, welche in der Nähe der Peripherie der Dichtungsplatte 10 einen in sich geschlossenen Linienzug bildet und die Gestalt einer Halbsicke hat, wie sich dies aus Fig. 2 ergibt. Die Wasserlöcher 24 befinden sich also zwischen der Abdichtsicke 40 und den Abdichtsicken 34, zu denen der Vollständigkeit wegen zu bemerken ist, daß in den schmalen Stegbereichen zwischen zwei einander benachbarten Brennraumöffnungen 12, 14 bzw. 14, 16 die die eine Brennraumöffnung umfassende Abdichtsicke 34 in die die andere Brennraumöffnung umfassende Abdichtsicke 34 übergeht, so daß sich in einem solchen Stegbereich in jeder der Deckblechlagen 30 nur noch eine einzige Abdichtsicke 34 befindet.

Um die in den beiden gemäß Fig. 1 unteren Ecken der Dichtungsplatte 10 liegenden Schraubenlöcher 18 herum verläuft gleichfalls eine als Halbsicke ausgebildete Abdichtsicke 42 in jeder der beiden Deckblechlagen 30, so wie sich dies aus den Figuren 1 und 3 ergibt. Weitere, als Halbsicken ausgebildete Abdichtsicken 44, 46, 48 und 50 in jeder der Deckblechlagen 30 umschließen jeweils ein Paar von einem Schraubenloch 18 und einer Schmieröl-Durchgangsöffnung 22 gebildeten Öffnungen bzw. die Durchgangsöffnung 20 für eine Zylinderkopfschraube und Schmieröl bzw. die Ölrücklauföffnung 26 sowie die Abdichtsicke 48.

Wie aus Fig. 1 ersichtlich, weist die Zylinderkopfdichtung an den Längsenden der Dichtungsplatte 10 jeweils eine erfindungsgemäße Abstützvorrichtung 60 auf, bei der es sich, wie die Figuren 2 bis 4 erkennen lassen, um einen durch Prägen der Trägerblechlage 32 erzeugten verdickten Bereich der Trägerblechlage handelt, der in der Draufsicht auf die letztere die Form eines langgestreckten, bandförmigen Bereichs der Trägerblechlage hat, welcher weder ein in sich geschlossenes Gebilde darstellt, noch irgendeine Öffnung der Zylinderkopfdichtung umschließt oder sich so entlang einer Sicke der Zylinderkopfdichtung erstreckt, daß die Abstützvorrichtung über die ganze oder die überwiegende Länge dieser Sicke der letzteren benachbart verläuft, so wie dies bei einem Stopper der Fall wäre.

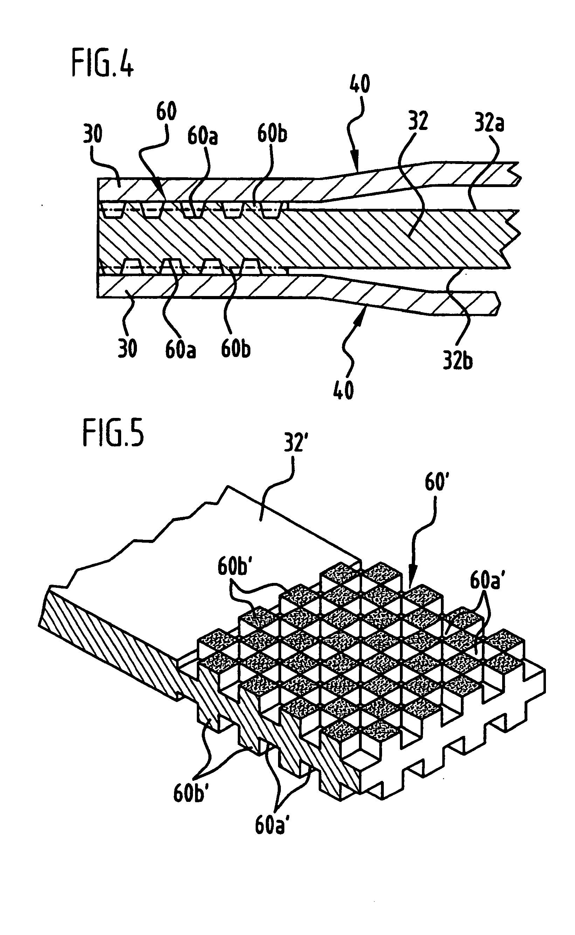

Wie insbesondere die Fig. 4 erkennen läßt, weist eine solche Abstützvorrichtung 60 eingeprägte Vertiefungen 60a und durch Materialverdrängung entstandene Erhebungen 60b auf, welche auf jeder der beiden Seiten der Trägerblechlage 32 ein schachbrettartiges Muster von Erhebungen und Vertiefungen bilden sollen, so wie dies für eine modifizierte Ausführungsform in Fig. 5 dargestellt ist. Aus dem Umstand, daß die Vertiefungen 60a und die Erhebungen 60b in bzw. an der Trägerblechlage 32 erfindungsgemäß durch Prägen, und zwar durch Fließpressen, entstanden sind, folgt, daß die Summe der Volumina derjenigen Teile der Vertiefungen 60a, welche zwischen den von den beiden Hauptoberflächen 32a und 32b der Trägerblechlage 32 definierten Ebenen (in Fig. 4 strichpunktiert dargestellt) liegen, gleich der Summe der Volumina derjenigen Teile der Erhebungen 60b ist, welche sich über die besagten Ebenen erheben. Ferner ragen bei einer bevorzugten Ausführungsform die Erhebungen 60b auf der einen Seite der Trägerblechlage gleich weit über die eine dieser beiden Ebenen hinaus wie die Erhebungen 60b auf der anderen Seite der Trägerblechlage über die andere dieser beiden Ebenen, vor allem dann, wenn die beiden der Abstützvorrichtung 60 benachbarten, auf den beiden Seiten der Dichtungsplatte 10 liegenden Abdichtsicken 40 gleich hoch sind.

Bei der in den Figuren 2 bis 4 dargestellten Ausführungsform einer Abstützvorrichtung, nämlich bei der Abstützvorrichtung 60, liegt jeder Vertiefung 60a eine Erhebung 60b direkt gegenüber. Diesbezüglich unterscheidet sich die in Fig. 5 dargestellte Ausführungsform einer erfindungsgemäßen Abstützvorrichtung 60' von der Ausführungsform nach den Figuren 2 bis 4 insofern, als bei der Ausführungsform nach Fig. 5 in eine Trägerblechlage 32' eingeprägten Vertiefungen 60a' jeweils gleichfalls eine Vertiefung 60a' und jeder Erhebung 60b' gleichfalls eine Erhebung 60b' direkt gegenüberliegt, wobei dies der einzige Unterschied zu der Ausführungsform nach den Figuren 2 bis 4 ist.

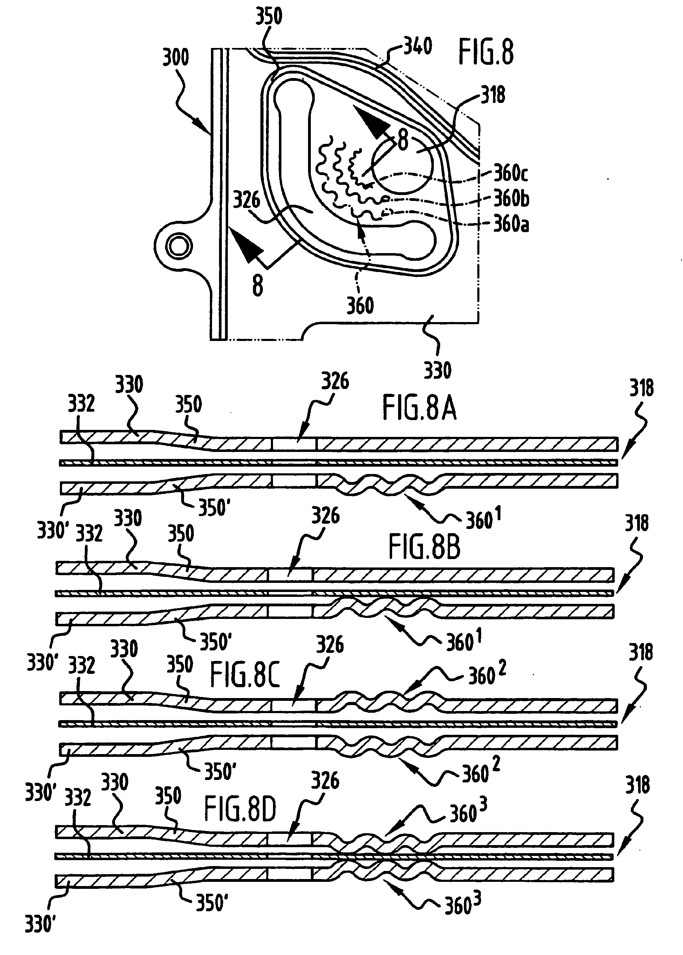

Die Figuren 6 und 7 zeigen den Figuren 3 und 4 entsprechende Schnittdarstellungen durch zwei weitere Ausführungsformen erfindungsgemäßer Abstützvorrichtungen, jedoch in zweilagigen Zylinderkopfdichtungen. In den Figuren 6 und 7 wurden dieselben Bezugszeichen wie in den Figuren 3 und 4 verwendet, jedoch um 100 bzw. 200 erhöht, so daß es genügt, wenn im folgenden nur die Unterschiede der in den Figuren 6 und 7 dargestellten Ausführungsformen zu der Ausführungsform gemäß den Figuren 2 bis 4 beschrieben werden.

Da die teilweise in Fig. 6 dargestellte Zylinderkopfdichtung nur zweilagig ist und eine Deckblechlage 130 sowie eine Trägerblechlage 132 aufweist, ist es ausreichend, wenn die an der Trägerblechlage 132 vorgesehene Abstützvorrichtung 160 nur über die der Deckblechlage 130 zugekehrte Hauptoberfläche 132a der Trägerblechlage 132 übersteht, nämlich mit Erhebungen 136b, denen jeweils eine in die Trägerblechlage 132 eingeprägte Vertiefung 136a direkt gegenüberliegt. In Draufsichten auf die Trägerblechlage 132 sollen die Vertiefungen 136a bzw. die Erhebungen 136b wieder ein schachbrettartiges Muster bilden ähnlich dem in Fig. 5 dargestellten Muster. Ferner soll die Summe der Volumina der Vertiefungen 136a gleich der Summe der Volumina der Erhebungen 136b sein, so wie sich dies beim Fließpressen mit einem Werkzeug ergibt, welches für das Einprägen der Vertiefungen 136a stempelartige Vorsprünge und für die Aufnahme und Formgebung der Erhebungen 136b napfartige Vertiefungen in einer Auflagefläche für die Trägerblechlage 132 aufweist.

Während bei der in Fig. 6 dargestellten Ausführungsform sich die Vertiefungen 136a auf der einen und die Erhebungen 136b auf der anderen Seite der Trägerblechlage 132 befinden, liegen die Vertiefungen 236a und die Erhebungen 236b der in Fig. 7 dargestellten Ausführungsform auf derselben Seite einer Trägerblechlage 232, so daß beim Einprägen der Vertiefungen 236a das dadurch verdrängte Material der Trägerblechlage 232 nach der Seite zu verdrängt wird und das Fließpreßwerkzeug zur Herstellung der Abstützvorrichtung 260 einerseits eine ebene, geschlossene Auflagefläche für die Trägerblechlage 232 und andererseits eine Werkzeugoberfläche aufweist, die mit stempelartigen Vorsprüngen zum Einprägen der Vertiefungen 236a sowie mit napfartigen Vertiefungen zur Aufnahme und Formgebung der Erhöhungen 236b versehen ist. Bei der Ausführungsform nach Fig. 7 ist die Summe der Volumina der Erhebungen 236b, soweit diese über die von der Hauptoberfläche 232a der Trägerblechlage 232 definierte und in Fig. 7 strichpunktiert gezeichnete Ebene vorspringen, gleich der Summe der Volumina der Vertiefungen 236a, soweit diese unterhalb dieser Ebene liegen.

Da bei der vorstehend erläuterten Gattung erfindungsgemäßer Abstützvorrichtungen diese durch Fließpressen erzeugt werden, ist diese Gattung von Abstützvorrichtungen ganz besonders druckfest, da infolge der beim Fließpressen stattfindenden Verformung der Metallblechlage der Werkstoff markant verfestigt wird. Ein weiterer Vorteil dieser Gattung von Abstützvorrichtungen ist darin zu sehen, daß diese mit den Kuppen der Erhebungen, welche ein zweidimensionales Muster bilden und zumindest im wesentlichen in einer gemeinsamen Ebene liegen, eine verhältnismäßig große Auflage- und Abstützfläche bilden, so daß bei einer Druckbeanspruchung die auf die Flächeneinheit dieser Abstützfläche bezogene spezifische Flächenpressung verhältnismäßig gering ist. Infolgedessen führen die Erhebungen dieser Gattung von Abstützvorrichtungen nicht zu Eindrücken in den Dichtflächen von Zylinderkopf und/oder Motorblock, und zwar selbst dann nicht, wenn diese Erhebungen - anders als bei den dargestellten Ausführungsformen - unmittelbar gegen eine solche Motorbauteil-Dichtfläche anliegen und nicht von einer weiteren Metallblechlage der Zylinderkopfdichtung abgedeckt werden. In diesem Zusammenhang muß man sich auch vor Augen halten, daß mit federelastischen Abdichtsicken versehene Metallblechlagen von Zylinderkopfdichtungen eine verhältnismäßig geringe Materialstärke aufweisen, d. h. verhältnismäßig dünn sind, was bei von geradlinigen oder kreisbogenförmigen Sicken gebildeten Abstützvorrichtungen dazu führen kann, daß die an den geradlinigen oder kreisbogenförmigen Sickenkämmen auftretenden hohen spezifischen Flächenpressungen durch eine solche dünne und federelastische Metallblechlage hindurch wirken und entsprechende Eindrücke in der Dichtfläche eines Zylinderkopfs und/oder in der Dichtfläche eines Motorblocks zur Folge haben.

Die durch Prägen erzeugten napfartigen Vertiefungen eines Abstützbereichs können aber statt durch Fließpressen auch durch einfaches Einprägen (ähnlich einem Tiefziehvorgang) erzeugt werden, so daß jeder napfartigen Vertiefung auf der gegenüberliegenden Seite der Blechlage eine noppenartige Erhebung gegenüberliegt, so wie dies für sogenannte Stopper in der EP-1 298 364-A offenbart wird.

Die Figuren 8 bis 10 zeigen Abschnitte erfindungsgemäßer Zylinderkopfdichtungen mit einer zweiten Gattung erfindungsgemäßer Abstützvorrichtungen, welche geprägte Abstützsicken mit in einer Draufsicht auf die Zylinderkopfdichtung mäanderförmiger Gestalt aufweisen.

Die Fig. 8 zeigt eine Draufsicht auf einen Eckbereich einer Dichtungsplatte 300 einer erfindungsgemäßen Zylinderkopfdichtung, wobei dieser Eckbereich dem linken unteren Eckbereich der in Fig. 1 dargestellten Dichtung entsprechen kann. Bei der in Fig. 8 dargestellten Zylinderkopfdichtung soll es sich wieder um eine dreilagige Dichtung handeln, deren in Fig. 8 obenliegende Deckblechlage 330 mit einer der in Fig. 1 dargestellten Abdichtsicke 40 entsprechenden Abdichtsicke 340 und einer der in Fig. 1 dargestellten Abdichtsicke 50 entsprechenden Abdichtsicke 350 versehen ist. Ferner weist der in Fig. 8 gezeichnete Bereich der Dichtungsplatte 300 ein Schraubenloch 318 und eine Ölrücklauföffnung 326 auf, welche beide gemeinsam von der Abdichtsicke 350 umschlossen werden.

Dem Schraubenloch 318 benachbart ist eine erfindungsgemäße Abstützvorrichtung 360 vorgesehen, von der verschiedene Ausführungsformen in den Figuren 8A bis 8D im einzelnen dargestellt sind. Allen diesen Ausführungsformen ist gemeinsam, daß zur Bildung einer erfindungsgemäßen Abstützvorrichtung in eine oder mehrere Metallblechlagen der Dichtung eine oder mehrere Abstützsicken eingeprägt wird bzw. werden, wobei jede dieser Abstützsicken in einer Draufsicht auf die betreffende Metallblechlage eine mäanderförmige Gestalt bzw. einen mäanderförmigen Verlauf aufweist und im Falle von mehreren solchen Abstützsicken diese vorzugsweise zumindest im wesentlichen parallel zueinander verlaufen. In Fig. 8 sind drei solche Abstützsicken strichpunktiert angedeutet und mit 360a, 360b sowie 360c bezeichnet.

In Fig. 8A nehmen die Deckblechlage 330 und eine weitere Deckblechlage 330' eine dritte Blechlage 332 zwischen sich auf, und die Deckblechlage 330' weist eine der Abdichtsicke 350 entsprechende Abdichtsicke 350' auf, wobei es sich in beiden Fällen um sogenannte Halbsicken handelt. In eine der beiden Deckblechlagen - im zeichnerisch dargestellten Fall in die Deckblechlage 330' - ist eine erfindungsgemäße Abstützvorrichtung 360¹ eingeprägt, die wie in Fig. 8 dargestellt aus drei mäanderförmigen und parallel zueinander verlaufenden Abstützsicken 360a, 360b und 360c besteht, welche nur auf einer Seite über die Deckblechlage 330' überstehen, nämlich über die in Fig. 8A untenliegende Hauptoberfläche dieser Deckblechlage.

Da sich die in Fig. 8B dargestellte Ausführungsform von derjenigen gemäß Fig. 8A nur dadurch unterscheidet, daß die Abstützsicken nicht über die Außenseite der Zylinderkopfdichtung überstehen, sondern von der einen Deckblechlage nach innen abstehen, wurden in Fig. 8B dieselben Bezugszeichen wie in Fig. 8A verwendet, so daß es keiner weiteren Beschreibung der Fig. 8B bedarf.

Dies gilt auch für die in den Figuren 8C und 8D dargestellten Ausführungsformen, weil sich die Ausführungsform nach Fig. 8C von der Ausführungsform nach Fig. 8A bzw. die Ausführungsform nach Fig. 8D von der Ausführungsform nach Fig. 8B nur dadurch unterscheidet, daß beide Deckblechlagen 330, 330' mit einer Abstützvorrichtung 360² bzw. 360³ versehen sind.

Die Ausführungsformen nach den Figuren 8A und 8B eignen sich besonders für Motoren mit einem Leichtmetall-Zylinderkopf, welcher anfällig gegen Eindrücke in seiner Dichtfläche ist, weil dann eine Zylinderkopfdichtung nach Fig. 8A bzw. 8B so eingebaut werden kann, daß die Abstützvorrichtung 360¹ auf der Seite des Motorblocks liegt und in Richtung auf den Zylinderkopf von mehreren Blechlagen überdeckt wird.

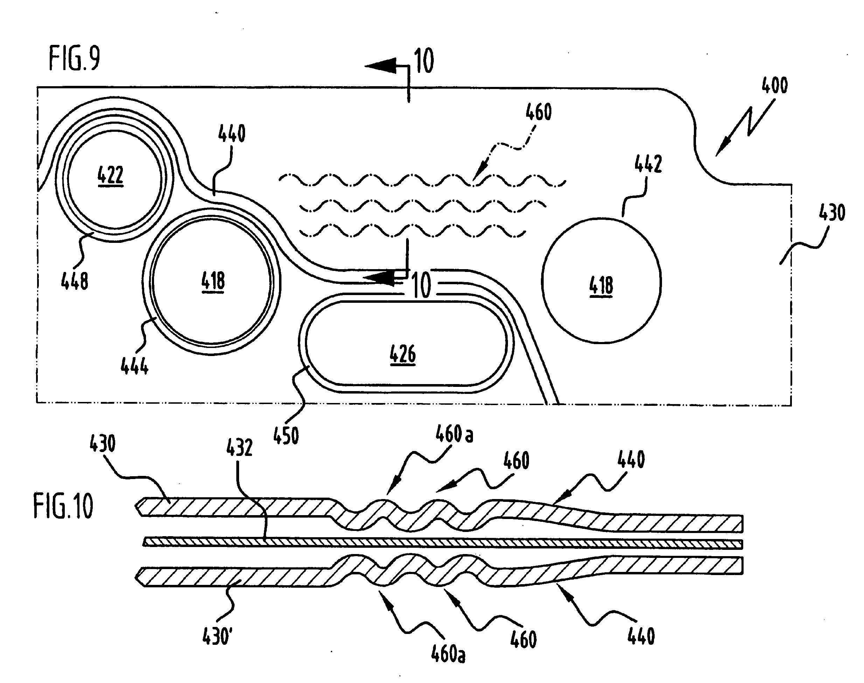

In Fig. 9 ist wieder ein kleiner Bereich einer Dichtungsplatte 400 einer mehrlagigen Zylinderkopfdichtung dargestellt, und zwar ein an die Peripherie der Dichtungsplatte angrenzender Bereich, in dem die Dichtungsplatte 400 mit zwei Schraubenlöchern 418, einer Öldurchgangsöffnung 422 und einer Ölrücklauföffnung 426 versehen ist. Ähnlich wie bei der in Fig. 1 dargestellten Ausführungsform läuft eine in eine obere Deckblechlage 430 eingeprägte Abdichtsicke 440 um zahlreiche Öffnungen der Dichtungsplatte 400 herum, unter anderem um die Öffnungen 422, 426 und das eine Schraubenloch 418. Alle in Fig. 9 gezeigten Öffnungen werden außerdem von jeweils einer zusätzlichen Abdichtsicke 442 bzw. 444 bzw. 448 bzw. 450 umschlossen, welche gleichfalls in die Deckblechlage 430 eingeprägt wurde.

Wie die Fig. 10 erkennen läßt, umfaßt die Dichtungsplatte 400 außer der in Fig. 9 obenliegenden Deckblechlage 430 eine weitere Deckblechlage 430' sowie eine innenliegende Blechlage 432, und soweit der in Fig. 9 dargestellte Bereich der Zylinderkopfdichtung betroffen ist, soll die Dichtungsplatte 400 zur Blechlage 432 spiegelbildlich ausgebildet sein.

In einem gemäß Fig. 9 außerhalb der Abdichtsicke 440 und ungefähr zwischen den beiden in Fig. 9 gezeigten Schraubenlöchern 418 liegenden Bereich der Dichtungsplatte 400 sind die beiden Deckblechlagen 430 und 430' mit einer erfindungsgemäßen Abstützvorrichtung 460 versehen, von denen jede drei in die betreffende Deckblechlage eingeprägte Abstützsicken 460a aufweist, die in einer Draufsicht auf die Dichtungsplatte bzw. die betreffende Deckblechlage einen mäanderförmigen Verlauf haben und ungefähr parallel zueinander verlaufen. Wie die Fig. 10 zeigt, springen diese Abstützsicken nur in Richtung auf die Blechlage 432 über die betreffende Deckblechlage 430 bzw. 430' vor, und die Abstützsicken sind so angeordnet, daß die Kuppen der Abstützsicken der einen Deckblechlage den Kuppen der Abstützsicken der anderen Deckblechlage unmittelbar gegenüberliegen, so wie dies auch bei den Ausführungsformen nach den Figuren 8C und 8D der Fall ist.

Im Vergleich zu Abstützsicken, deren Kämme in einer Draufsicht auf die entsprechende Blechlage eine gerade Linie oder einen Kreisbogen bilden, weisen von mäanderförmigen Abstützsicken gebildete Abstützvorrichtungen eine wesentlich höhere Festigkeit oder Steifigkeit gegenüber einer Druckbeanspruchung senkrecht zur betreffenden Blechlage auf, wobei diese Steifigkeit oder Festigkeit einer mäanderförmigen Abstützsicke um so größer ist, je enger die Mäanderschlingen beieinanderliegen (in einer Draufsicht auf die betreffende Blechlage), d. h. je größer die Zahl der Mäanderschlingen pro Längeneinheit der Abstützvorrichtung ist (natürlich nimmt die Steifigkeit auch mit der Anzahl der Abstützsicken einer Abstützvorrichtung zu).

Nur der Vollständigkeit halber sei noch erwähnt, daß bei erfindungsgemäßen Zylinderkopfdichtungen die Außenseiten der Dichtungsplatten, aber auch im Innern der Dichtungsplatten liegende Hauptoberflächen von Metallblechlagen mit einer Beschichtung versehen sein können, z. B. mit einer Beschichtung aus elastomerem Material, um die Abdichteigenschaften der Dichtung und/oder die Korrosionsbeständigkeit der Dichtung zu verbessern. Derartige, z. B. im Spritz- oder Tauchverfahren aufgebrachte Beschichtungen können sich auch über die Elemente erfindungsgemäßer Abstützvorrichtungen erstrecken.

Bei einer erfindungsgemäßen Zylinderkopfdichtung mit mehreren Abstützvorrichtungen kann eine dieser Abstützvorrichtungen von einer oder mehreren Abstützsicken mäanderförmiger Gestalt und eine andere Abstützvorrichtung von einem Muster aus Vertiefungen und zugeordneten Erhebungen gebildet sein, d. h. Mischformen sollen ebenfalls als unter die Erfindung fallend betrachtet werden.

An die Stelle einer geprägten Abstützsicke kann erfindungsgemäß auch eine Gruppe von kurzen geprägten Sicken treten, welche insbesondere parallel zueinander verlaufen, bei einer länglichen Dichtungsplatte bevorzugt schräg zur Längsrichtung der Dichtungsplatte; alternativ könnten die kurzen Sicken der Gruppe auch nach Art eines Strahlenkranzes angeordnet sein, d. h. ungefähr radial zu einem imaginären Zentrum verlaufen. Wenn vorstehend von einer kurzen Sicke die Rede ist, soll hierunter verstanden werden, daß die Länge der Sicke kleiner ist als der Abstand eines Schmalseitenrands der Dichtungsplatte von einer diesem benachbarten Schraubenöffnung und insbesondere kleiner als der Durchmesser einer dem erfindungsgemäßen Abstützbereich benachbarten Schraubenöffnung, vorzugsweise ungefähr gleich oder kleiner als der halbe Durchmesser dieser Schraubenöffnung.

Vorzugsweise soll eine erfindungsgemäße Abstützvorrichtung hinsichtlich ihrer Steifigkeit, ihrer Höhe und der von ihr eingenommenen Fläche der Dichtungsplatte so gestaltet sein, daß sie nach dem Einbau der Zylinderkopfdichtung bis zu ungefähr 50 % der auf die eingebaute Zylinderkopfdichtung einwirkenden Einspannkräfte aufnimmt bzw. trägt, welche von der durch die benachbarte Schraubenöffnung verlaufenden Zylinderkopfschraube auf die eingebaute Zylinderkopfdichtung ausgeübt werden.

## Patentansprüche

1. Zylinderkopfdichtung mit einer Dichtungsplatte (10; 300; 400), die wenigstens eine Metallblechlage (30, 32; 130, 132; 230, 232; 330, 332, 330'; 430, 432, 430'), Schraubenöffnungen (18) für den Durchtritt von Zylinderkopfschrauben und mindestens eine Brennraumöffnung (12, 14, 16) aufweist, welche von einer der Brennraum-Abdichtung dienenden, mindestens eine Abdichtsicke (34) aufweisenden Abdichtvorrichtung (34, 36) umschlossen wird, wobei zur Verminderung von Verzügen eines Motorblocks und/oder eines Zylinderkopfs, zwischen denen die Zylinderkopfdichtung mittels Zylinderkopfschrauben einzuspannen ist, die Dichtungsplatte neben oder im Abstand von der bezüglich der Brennraumöffnung radial äußeren Seite der Abdichtvorrichtung mindestens eine durch eine Verformung der wenigstens einen Blechlage erzeugte Abstützvorrichtung (60; 360; 460) zur Aufnahme von bei eingebauter Zylinderkopfdichtung auf diese einwirkenden, senkrecht zur Dichtungsplatte verlaufenden Einspannkräften aufweist, die Abstützvorrichtung (60; 360; 460) einen durch Prägen der mindestens einen Blechlage verdickten Bereich der Blechlage aufweist, so dass die Dicke der Dichtungsplatte bei eingebauter, gepresster Zylinderkopfdichtung an der Stelle der Abstützvorrichtung größer ist als in an die Abstützvorrichtung angrenzenden Bereichen der Dichtungsplatte, und wobei dieser verdickte Abstützbereich keine der abzudichtenden Öffnungen der Dichtung vollständig oder nahezu vollständig umschließt, **dadurch gekennzeichnet, dass** der verdickte Abstützbereich aufweist mehrere geprägte Abstützsicken (360a; 460a), die in einer Draufsicht auf die Blechlage eine mäanderförmige Gestalt besitzen und nebeneinander verlaufen oder eine Gruppe von kurzen geprägten Abstützsicken bilden, deren Länge kleiner ist als der Durchmesser einer der Abstützvorrichtung benachbarten Schraubenöffnung (18), wobei die Abstützsicken in der mit der Abdichtsicke (350') versehenen Metallblechlage (330') oder in einer anderen Metallblechlage vorgesehen sind.

2. Zylinderkopfdichtung mit einer Dichtungsplatte (10; 300; 400), die wenigstens eine Metallblechlage (30, 32; 130, 132; 230, 232; 330, 332, 330'; 430, 432, 430'), Schraubenöffnungen (18) für den Durchtritt von Zylinderkopfschrauben und mindestens eine Brennraumöffnung (12, 14, 16) aufweist, welche von einer der Brennraum-Abdichtung dienenden, mindestens eine Abdichtsicke (34) aufweisenden Abdichtvorrichtung (34, 36) umschlossen wird, wobei zur Verminderung von Verzügen eines Motorblocks und/oder eines Zylinderkopfs, zwischen denen die Zylinderkopfdichtung mittels Zylinderkopfschrauben einzuspannen ist, die Dichtungsplatte neben oder im Abstand von der bezüglich der Brennraumöffnung radial äußeren Seite der Abdichtvorrichtung mindestens eine durch eine Verformung der wenigstens einen Blechlage erzeugte Abstützvorrichtung (60; 360; 460) zur Aufnahme von bei eingebauter Zylinderkopfdichtung auf diese einwirkenden, senkrecht zur Dichtungsplatte verlaufenden Einspannkräften aufweist, die Abstützvorrichtung (60; 360; 460) einen durch Prägen der mindestens einen Blechlage verdickten Bereich der Blechlage aufweist, so dass die Dicke der Dichtungsplatte bei eingebauter, gepresster Zylinderkopfdichtung an der Stelle der Abstützvorrichtung größer ist als in an die Abstützvorrichtung angrenzenden Bereichen der Dichtungsplatte, und wobei dieser verdickte Abstützbereich keine der abzudichtenden Öffnungen der Dichtung vollständig oder nahezu vollständig umschließt, **dadurch gekennzeichnet, dass** der verdickte Abstützbereich aufweist ein in einer Draufsicht auf die Blechlage zweidimensionales Muster von napfartigen Vertiefungen (60a; 136a; 236a), welchen durch beim Einprägen der Vertiefungen gebildete Erhebungen (60b; 136b; 236b) zugeordnet sind, wobei die Gesamtdicke der Blechlage (32; 132; 232) im Bereich der Erhebungen und Vertiefungen größer ist als die originäre Dicke der Blechlage, und wobei die Vertiefungen tiefgezogene Vertiefungen sind und die Abstützvorrichtung an der mit der Abdichtvorrichtung versehenen Metallblechlage (30) ausgebildet ist, oder die Vertiefungen fließgepresste Vertiefungen (60a) sind, welchen durch beim Einprägen der Vertiefungen verdrängtes Material der Blechlage (32) gebildete Erhebungen (60b) zugeordnet sind.

3. Zylinderkopfdichtung nach Anspruch 2, **dadurch gekennzeichnet, dass** die Vertiefungen (60a; 136a; 236a) fließgepresste Vertiefungen sind, welchen durch beim Einprägen der Vertiefungen verdrängtes Material der Blechlage gebildete Erhebungen (60b; 136b; 236b) zugeordnet sind.

4. Zylinderkopfdichtung nach Anspruch 1 oder 2, bei der die wenigstens eine Blechlage (30, 32; 430, 430') eine dem Abstützbereich (60; 460) benachbarte Abdichtsicke (40; 440) aufweist, **dadurch gekennzeichnet, dass** sich der Abstützbereich (60; 460) nur über einen kleineren Teil der Länge der Abdichtsicke (40; 440) dieser benachbart erstreckt.

5. Zylinderkopfdichtung nach Anspruch 1 oder 2 mit einer länglichen Dichtungsplatte, welche zwischen ihren beiden Längsenden mehrere Brennraumöffnungen (12, 14, 16) aufweist, **gekennzeichnet durch** wenigstens zwei Abstützbereiche (60), welche in der Nähe der Längsenden der Dichtungsplatte (10) angeordnet sind.

6. Zylinderkopfdichtung nach Anspruch 1 oder 2 mit einer länglichen Dichtungsplatte, welche zwischen ihren beiden Längsenden mehrere Brennraumöffnungen (12, 14, 16) und in der Nähe dieser Längsenden Schraubenöffnungen (18) für den Durchtritt von Zylinderkopfschrauben aufweist, **gekennzeichnet durch** wenigstens zwei Abstützbereiche (60), welche in der Nähe dieser Schraubenöffnungen (18) angeordnet sind.

7. Zylinderkopfdichtung nach Anspruch 1, **dadurch gekennzeichnet, dass** der Abstützbereich wenigstens zwei nebeneinander verlaufende Abstützsicken (360a, 360b, 360c; 460a) aufweist.

8. Zylinderkopfdichtung nach Anspruch 7, **dadurch gekennzeichnet, dass** in einem Schnitt durch den Abstützbereich (360; 460) senkrecht zur Dichtungsplatte (300; 400) und quer zu den Abstützsicken (360a, 360b, 360c; 460a) die Blechlage (330; 430) eine wellenförmige Gestalt aufweist.

9. Zylinderkopfdichtung nach Anspruch 2, **dadurch gekennzeichnet, dass** die Vertiefungen (236a) und die Erhebungen (236b) eines Abstützbereichs (260) lediglich an einer der beiden Hauptoberflächen der Blechlage (232) gebildet sind.

10. Zylinderkopfdichtung nach Anspruch 2, **dadurch gekennzeichnet, dass** die Vertiefungen (136a) eines Abstützbereichs (160) lediglich in eine Hauptoberfläche der Blechlage (132) eingeprägt und die zugeordneten Erhebungen (136b) nur an der anderen Hauptoberfläche der Blechlage ausgebildet sind.

11. Zylinderkopfdichtung nach Anspruch 2, **dadurch gekennzeichnet, dass** der Abstützbereich (60') in einer Draufsicht auf jede der beiden Hauptoberflächen der Blechlage (32') jeweils ein zweidimensionales Muster von eingeprägten Vertiefungen (60a') und ein zweidimensionales Muster von Erhebungen (60b') bildet.

12. Zylinderkopfdichtung nach Anspruch 2, **dadurch gekennzeichnet, dass** jeder der in eine der Hauptoberflächen (32a, 32b) der Blechlage (32) eingeprägten Vertiefungen (60a) auf der anderen Hauptoberfläche der Blechlage eine Erhebung (60b) unmittelbar gegenüberliegt.

13. Zylinderkopfdichtung nach Anspruch 2, **dadurch gekennzeichnet, dass** in die beiden Hauptoberflächen der Blechlage (32') eingeprägte Vertiefungen (60a') einander jeweils unmittelbar gegenüberliegen.

14. Zylinderkopfdichtung nach Anspruch 2, **dadurch gekennzeichnet, dass** in einer Draufsicht auf die Blechlage (32') der Abstützbereich (60') ein zweidimensionales Muster von diskreten, noppenförmigen Erhebungen (60b') aufweist.

## Claims

1. Cylinder head gasket with a gasket plate (10; 300; 400) having at least one layer of sheet metal (30, 32; 130, 132; 230, 232; 330, 332, 330'; 430, 432, 430'), screw openings (18) for the passage of cylinder head screws and at least one combustion chamber aperture (12, 14, 16) enclosed by a sealing device (34, 36) serving the purpose of sealing the combustion chamber and having at least one sealing bead (34), wherein to reduce any warpage of an engine block and/or of a cylinder head between which the cylinder head gasket is to be clamped by means of cylinder head screws, the gasket plate has next to or at a distance from the radially outer side of the sealing device with respect to the combustion chamber aperture at least one supporting device (60; 360; 460) for absorbing clamping forces extending at right angles to the gasket plate and acting on the cylinder head gasket when this is installed, said supporting device (60; 360; 460) being generated by a deformation of the at least one sheet-metal layer and having an area of the sheet-metal layer thickened by way of embossing of the at least one sheet-metal layer such that when the cylinder head gasket is installed and compressed the thickness of the gasket plate is greater at the location of the supporting device than in areas of the gasket plate bordering on the supporting device, and wherein this thickened supporting area encloses none of the apertures of the gasket to be sealed completely or almost completely, **characterized in that** the thickened supporting area has several embossed supporting beads (360a; 460a) having a meandering shape in a plan view of the sheet-metal layer and extending next to one another or forming a group of short, embossed supporting beads, the length of said supporting beads being smaller than the diameter of a screw opening (18) adjacent to the supporting device, wherein the supporting beads are provided in the sheet-metal layer (330') provided with the sealing bead (350') or in another sheet-metal layer.

2. Cylinder head gasket with a gasket plate (10; 300; 400) having at least one layer of sheet metal (30, 32; 130, 132; 230, 232; 330, 332, 330'; 430, 432, 430'), screw openings (18) for the passage of cylinder head screws and at least one combustion chamber aperture (12, 14, 16) enclosed by a sealing device (34, 36) serving the purpose of sealing the combustion chamber and having at least one sealing bead (34), wherein to reduce any warpage of an engine block and/or of a cylinder head between which the cylinder head gasket is to be clamped by means of cylinder head screws, the gasket plate has next to or at a distance from the radially outer side of the sealing device with respect to the combustion chamber aperture at least one supporting device (60; 360; 460) for absorbing clamping forces extending at right angles to the gasket plate and acting on the cylinder head gasket when this is installed, said supporting device (60; 360; 460) being generated by a deformation of the at least one sheet-metal layer and having an area of the sheet-metal layer thickened by way of embossing of the at least one sheet-metal layer such that when the cylinder head gasket is installed and compressed the thickness of the gasket plate is greater at the location of the supporting device than in areas of the gasket plate bordering on the supporting device, and wherein this thickened supporting area encloses none of the apertures of the gasket to be sealed completely or almost completely, **characterized in that** the thickened supporting area has a pattern of cup-like recesses (60a, 136a; 236a), said pattern being two-dimensional in a plan view of the sheet-metal layer, elevations (60b; 136b; 236b) formed during the impressing of the recesses being associated with said recesses, wherein the overall thickness of the sheet-metal layer (32; 132; 232) is greater in the area of the elevations and recesses than the original thickness of the sheet-metal layer, and wherein the recesses are deep-drawn recesses and the supporting device is formed on the sheet-metal layer (30) provided with the sealing device or the recesses are metal flowing or creeping pressed recesses (60a), elevations (60b) formed by material of the sheet-metal layer (32) displaced during the impressing of the recesses being associated with said recesses.

3. Cylinder head gasket as defined in claim 2, **characterized in that** the recesses (60a; 136a; 236a) are metal flowing or creeping pressed recesses, elevations (60b; 136b; 236b) formed by material of the sheet-metal layer displaced during the impressing of the recesses being associated with said recesses.

4. Cylinder head gasket as defined in claim 1 or 2, wherein the at least one sheet-metal layer (30, 32; 430, 430') has a sealing bead (40; 440) adjacent to the supporting area (60; 460), **characterized in that** the supporting area (60; 460) extends only over a smaller part of the length of the sealing bead (40; 440) adjacent to it.

5. Cylinder head gasket as defined in claim 1 or 2 with an elongated gasket plate having several combustion chamber apertures (12, 14, 16) between its two longitudinal ends, **characterized by** at least two supporting areas (60) arranged in the vicinity of the longitudinal ends of the gasket plate (10).

6. Cylinder head gasket as defined in claim 1 or 2 with an elongated gasket plate having several combustion chamber apertures (12, 14, 16) between its two longitudinal ends and screw openings (18) for the passage of cylinder head screws in the vicinity of these longitudinal ends, **characterized by** at least two supporting areas (60) arranged in the vicinity of these screw openings (18).

7. Cylinder head gasket as defined in claim 1, **characterized in that** the supporting area has at least two supporting beads (360a, 360b, 360c; 460a) extending next to one another.

8. Cylinder head gasket as defined in claim 7, **characterized in that** the sheet-metal layer (330; 430) has a wave-like shape in a section through the supporting area (360; 460) at right angles to the gasket plate (300; 400) and transversely to the supporting beads (360a, 360b, 360c; 460a).

9. Cylinder head gasket as defined in claim 2, **characterized in that** the recesses (236a) and the elevations (236b) of a supporting area (260) are formed solely on one of the two main surfaces of the sheet-metal layer (232).

10. Cylinder head gasket as defined in claim 2, **characterized in that** the recesses (136a) of a supporting area (160) are impressed solely into one main surface of the sheet-metal layer (132) and the associated elevations (136b) are formed only on the other main surface of the sheet-metal layer.

11. Cylinder head gasket as defined in claim 2, **characterized in that** in a plan view of each of the two main surfaces of the sheet-metal layer (32') the supporting area (60') forms each time a two-dimensional pattern of impressed recesses (60a') and a two-dimensional pattern of elevations (60b').

12. Cylinder head gasket as defined in claim 2, **characterized in that** each of the recesses (60a) impressed into one of the main surfaces (32a, 32b) of the sheet-metal layer (32) is located directly opposite an elevation (60b) on the other main surface of the sheet-metal layer.

13. Cylinder head gasket as defined in claim 2, **characterized in that** recesses (60a') impressed into the two main surfaces of the sheet-metal layer (32') are respectively located directly opposite one another.

14. Cylinder head gasket as defined in claim 2, **characterized in that** in a plan view of the sheet-metal layer (32') the supporting area (60') has a two-dimensional pattern of discrete, knob-like elevations (60b').

## Revendications

1. Joint de culasse, avec une plaque d'étanchéité (10 ; 300; 400), comportant au moins une couche de tôle métallique (30, 32 ; 130, 132 ; 230, 232 ; 330, 332, 330'; 430, 432, 430'), des ouvertures pour vis (18) pour le passage de vis à tête cylindrique et au moins une ouverture sur la chambre de combustion (12, 14, 16) entourée par un dispositif d'étanchéité (34, 36), destiné à assurer l'étanchéité de la chambre de combustion, comportant au moins une moulure d'étanchéité (34), pour réduire des déformations d'un bloc moteur et/ou d'une culasse, entre lesquels le joint de culasse doit être enserré au moyen de vis à tête cylindrique, la plaque d'étanchéité comportant à côté ou avec un écart par rapport à la face extérieure, en direction radiale par rapport à l'ouverture sur la chambre de combustion au moins un dispositif d'appui (60 ; 360; 460) créé par une déformation de la au moins une couche de tôle, pour l'absorption de forces de serrage, s'étendant à la perpendiculaire de la plaque d'étanchéité, agissant sur le joint de culasse, lorsque ce dernier est monté, le dispositif d'appui (60; 360; 460) comportant une région de la couche de tôle qui est surépaissie par estampage de la au moins une couche de tôle, pour que lorsque le joint de culasse est monté et pressé, à l'endroit du dispositif d'appui, l'épaisseur de la plaque d'étanchéité soit supérieure à celle des régions de la plaque d'étanchéité qui sont adjacentes au dispositif d'appui et cette région d'appui surépaissie n'entourant totalement ou presque totalement aucune des ouvertures du joint dont il faut assurer l'étanchéité, **caractérisé en ce que**, la région d'appui surépaissie comporte plusieurs moulures d'appui estampées (360a; 460a), qui dans une vue en élévation sur la couche de tôle ont une conformation en forme de méandres et qui s'étendent côte à côte ou forment un groupe de courtes moulures d'appui estampées, dont la longueur est inférieure au diamètre de l'une des ouvertures pour vis (18) voisine du dispositif d'appui, les moulures d'appui étant prévues dans la couche de tôle métallique (330') munie de la moulure d'étanchéité (350') ou dans une autre couche de tôle métallique.

2. Joint de culasse, avec une plaque d'étanchéité (10 ; 300 ; 400), comportant au moins une couche de tôle métallique (30, 32 ; 130, 132; 230, 232 ; 330, 332, 330' ; 430, 432, 430'), des ouvertures pour vis (18) pour le passage de vis à tête cylindrique et au moins une ouverture sur la chambre de combustion (12, 14, 16) entourée par un dispositif d'étanchéité (34, 36) destiné à assurer l'étanchéité de la chambre de combustion, comportant au moins une moulure d'étanchéité (34), pour réduire des déformations d'un bloc moteur et/ou d'une culasse entre lesquels le joint de culasse doit être enserré au moyen de vis à tête cylindrique, la plaque d'étanchéité comportant à côté ou avec un écart par rapport à la face extérieure en direction radiale par rapport à l'ouverture sur la chambre de combustion du dispositif d'étanchéité au moins un dispositif d'appui (60 ; 360 ; 460) créé par une déformation de la au moins une couche de tôle, pour l'absorption de forces de serrage, s'étendant à la perpendiculaire de la plaque d'étanchéité, agissant sur le joint de culasse, lorsque ce dernier est monté, le dispositif d'appui (60 ; 360 ; 460) comportant une région de la couche de tôle qui est surépaissie par estampage de la au moins une couche de tôle, pour que lorsque le joint de culasse est monté et pressé, à l'endroit du dispositif d'appui, l'épaisseur de la plaque d'étanchéité soit supérieure à celle des régions de la plaque d'étanchéité qui sont adjacentes au dispositif d'appui et cette région d'appui surépaissie n'entourant totalement ou presque totalement aucune des ouvertures du joint dont il faut assurer l'étanchéité, **caractérisé en ce que**, la région d'appui surépaissie comporte un motif bidimensionnel en vue en élévation sur la couche de tôle de creux en forme de cuvettes (60a ; 136a; 236a), auxquels sont associées des élévations (60b; 136b; 236b) formées par estampage des creux, dans la région des élévations et des creux, l'épaisseur totale de la couche de tôle (32; 132; 232) étant supérieure à l'épaisseur d'origine de la couche de tôle, et les creux étant des creux emboutis, et le dispositif d'appui étant formé sur la couche de tôle métallique (30) munie du dispositif d'étanchéité ou les creux étant des creux extrudés (60a) auxquels sont associées des élévations (60b) formées par de la matière refoulée de la couche de tôle (32), lors de l'estampage des creux.

3. Joint de culasse selon la revendication 2, **caractérisé en ce que** les creux (60a ; 136a ; 236a) sont des creux extrudés, auxquels sont associées des élévations (60b; 136b; 236b) formées par de la matière refoulée de la couche de tôle, lors de l'estampage des creux.

4. Joint de culasse selon la revendication 1 ou 2, sur lequel la au moins une couche de tôle (30, 32 ; 430, 430') comporte une moulure d'appui (40; 440) voisine de la région d'appui (60 ; 460), **caractérisé en ce que** la région d'appui (60; 460) ne s'étend que sur une assez petite partie de la longueur de la moulure d'étanchéité (40; 440), au voisinage de cette dernière.

5. Joint de culasse selon la revendication 1 ou 2, avec une plaque d'étanchéité allongée, qui entre ses deux extrémités longitudinales comporte plusieurs ouvertures sur la chambre de combustion (12, 14, 16), **caractérisé par** au moins deux régions d'appui (60) qui sont disposées à proximité des extrémités longitudinales de la plaque d'étanchéité (10).

6. Joint de culasse selon la revendication 1 ou 2, avec une plaque d'étanchéité allongée, qui entre ses deux extrémités longitudinales comporte plusieurs ouvertures sur la chambre de combustion (12, 14, 16) et à proximité desdites extrémités longitudinales comporte des ouvertures pour vis (18) pour le passage de vis à tête cylindrique, **caractérisé par** au moins deux régions d'appui (60), qui sont disposées à proximité de ces ouvertures pour vis (18).

7. Joint de culasse selon la revendication 1, **caractérisé en ce que** la région d'appui comporte au moins deux moulures d'appui (360a, 360b, 360c; 460a) s'étendant côte à côte.

8. Joint de culasse selon la revendication 7, **caractérisé en ce que**, en coupe de la région d'appui (360 ; 460), à la perpendiculaire de la plaque d'étanchéité (300 ; 400) et à la transversale des moulures d'appui (360a, 360b, 360c ; 460a), la couche de tôle (330 ; 430) a une conformation ondulée.

9. Joint de culasse selon la revendication 2, **caractérisé en ce que** les creux (236a) et les élévations (236b) d'une région d'appui (260) sont uniquement formés sur l'une des surfaces principales de la couche de tôle (232).

10. Joint de culasse selon la revendication 2, **caractérisé en ce que** les creux (136a) d'une région d'appui (160) sont uniquement estampés dans une surface principale de la couche de tôle (132) et que les élévations associées (136b) ne sont formées que sur l'autre surface principale de la couche de tôle.

11. Joint de culasse selon la revendication 2, **caractérisé en ce que**, dans une vue en élévation sur chacune des deux surfaces principales de la couche de tôle (32'), la région d'appui (60') forme chaque fois un motif bidimensionnel de creux estampés (60a') et un motif bidimensionnel d'élévations (60b') .

12. Joint de culasse selon la revendication 2, **caractérisé en ce que**, à chacun des creux (60a) estampés dans une surface principale (32a, 32b) de la couche de tôle (32), fait face directement une élévation (60b) sur l'autre surface principale de la couche de tôle.

13. Joint de culasse selon la revendication 2, **caractérisé en ce que** des creux (60a') estampés dans les deux surfaces principales de la couche de tôle (32') se font directement face.

14. Joint de culasse selon la revendication 2, **caractérisé en ce que** dans une vue en élévation sur la couche de tôle (32'), la région d'appui (60') comporte un motif bidimensionnel de creux discrets, (60b') en forme de noppes.
